# EUROPÄISCHE PATENTSCHRIFT

(11) **EP 0 971 583 B1**
(45) Veröffentlichungstag und Bekanntmachung des Hinweises auf die Patenterteilung: **05.06.2002**
(21) Anmeldenummer: 98917087.3
(22) Anmeldetag: 26.03.1998
(51) Int. Cl.: A01N 31/02

(54) **DESINFEKTIONSVERFAHREN**
DISINFECTION METHOD
PROCEDE DE DESINFECTION

(30) Priorität: 04.04.1997 DE 19713849
(43) Veröffentlichungstag der Anmeldung: 19.01.2000
(73) Patentinhaber: Ecolab GmbH & CO. OHG, 40589 Düsseldorf (DE)
(72) Erfinder: VON RHEINBABEN, Friedrich, D-40597 Düsseldorf (DE); BANSEMIR, Klaus-Peter, D-40764 Langenfeld (DE); BIERING, Holger, D-41516 Grevenbroich (DE)
(86) Internationale Anmeldenummer: EP9801784
(87) Internationale Veröffentlichungsnummer: WO9844792

(56) Entgegenhaltungen:
- EP-A- 0 079 579
- WO-A-93/16597
- DE-A- 4 221 743
- US-A- 5 122 541
- PATENT ABSTRACTS OF JAPAN vol. 96, no. 3, 29. März 1996 & JP 07 298862 A (OKUNO CHEM. IND. CO. LTD.), 14. November 1995

## Beschreibung

Die vorliegende Erfindung betrifft ein Verfahren zur Desinfektion von Gegenständen mit Hilfe von flüssigen mikrobizid wirkenden Zubereitungen, das bei niedrigen Temperaturen durchgeführt werden kann.

Die Wirksamkeit herkömmlicher chemischer Desinfektionsmittel ist außer von der Einwirkzeit und der Konzentration in sehr starkem Maße von der Einwirkungstemperatur abhängig. Beispielhaft für die Untersuchungen auf diesem Gebiet sei hier nur auf die Arbeiten von P. Gelinas et al, Journal of Food Protection, Vol. 47, Nr. 11, Seiten 841 - 847 (1984) sowie von N. Noda et al, J. Jap. Ass. Infect. Dis. Vol 55, 355 - 366 (1981) hingewiesen. In vielen Fällen zeigte sich dabei außerdem, daß die abnehmende Wirksamkeit bei tiefen Temperaturen nicht über höhere Wirkstoffkonzentrationen ausgeglichen werden konnte, sofern dies aus toxikologischen Gründen überhaupt zulässig gewesen wäre. Zahlreiche bei Raumtemperatur mikrobizid wirkende Substanzen schieden daher als Wirkstoffe für einen Einsatz bei tiefen Temperaturen gänzlich aus. Im allgemeinen können bereits bei Temperaturen um ca. 5 °C nur noch stark wirkende Oxidationsmittel, wie Hypochlorit und Peressigsäure, eingesetzt werden. In vielen Fällen, beispielsweise zur Desinfektion von empfindlichen Materialien, sind aber auch diese Wirkstoffe wegen ihrer Korrosivität nicht geeignet. Für die Desinfektion bei tiefen Temperaturen, insbesondere bei Temperaturen unterhalb des Gefrierpunkts, suchte man daher seit langem nach Wirkstoffen oder Wirkstoffkombinationen, die eine sichere Wirksamkeit gewährleisten, ohne schädliche Nebenwirkungen aufzuweisen.

Mit der vorliegenden Erfindung konnte auf diesem Gebiet eine durchgreifende Verbesserung erreicht werden.

Gegenstand der vorliegenden Erfindung ist ein Verfahren zur Desinfektion von Gegenständen, bei dem diese Gegenstände bei Temperaturen unter 5 °C mit einer wäßrig-alkoholischen Salzlösung behandelt werden. Die Wirksamkeit ist im allgemeinen auch bei Temperaturen von 0 °C und darunter, in den meisten Fällen auch bei Temperaturen unter minus 10 °C und bei Temperaturen unter minus 50 °C gegeben. Besonders gute Wirksamkeit wird dann erreicht, wenn die Salze in der Desinfektionslösung in einer solchen Menge vorliegen, daß bei Anwendungstemperatur die Sättigungsgrenze erreicht oder überschritten wird. Gute Wirksamkeit findet sich sowohl bei den Metallsalzen organischer, als auch den Metallsalzen anorganischer Säuren.

Besonders bemerkenswert ist, daß das erfindungsgemäße Verfahren bei den Anwendungstemperaturen nicht nur einige wenige Mikroorganismen oder Viren, sondern ein sehr breites Spektrum erfaßt. Außerdem ist das Desinfektionsverfahren außerordentlich materialschonend, und die für die Desinfektion verwendeten alkoholisch-wäßrigen Salzlösungen behalten ihre Wirksamkeit auch nach langer Lagerzeit.

Die Anwendung des neuen Verfahrens erstreckt sich einerseits auf Gegenstände, die von Natur aus kalt gehalten werden müssen und für die sich ein Erwärmen auf Raumtempertur oder darüber aufgrund ihrer Bestimmung verbietet. Beispiele hierfür sind die Desinfektion von Oberflächen in Kühlräumen, Kühlhäusern und Kühl-Lastwagen sowie von speziellen Laborgeräten, wie Kühlzentrifugen und Kühltruhen. Hierzu zählt aber auch als Spezialgebiet die Desinfektion von tiefgefrorenen oder gekühlten Lebensmitteln. Weiterhin eignet sich das neue Desinfektionsverfahren für solche Gegenstände, die aus Gründen der Materialschonung besser nicht bei Zimmertemperatur oder darüber mit herkömmlichen Desinfektionswirkstoffen in Verbindung gebracht werden sollten. Hier kann mit dem neuen Verfahren die Materialschädigung durch die Wahl niedriger Desinfektionstemperaturen erheblich zurückgedrängt werden, ohne daß die Desinfektionswirkung eingeschränkt wäre.

Kennzeichnend für das neue Verfahren ist die gleichzeitige Anwesenheit von niederen Alkoholen und von Salzen, die zumindest partiell wasserlöslich sein müssen, in der wäßrigen Desinfektionsflüssigkeit. Flüssigkeiten dieser Zusammensetzung sind zwar schon bisher für die Desinfektion bei Normaltemperatur, beispielsweise aus den Patentanmeldungen WO 93/16597, DE 42 21 743 und EP 79 579 bekannt gewesen. Daß sich mit den dort beschriebenen Zusammensetzungen eine Desinfektion von Gegenständen auch bei niedrigen Temperaturen, insbesondere unterhalb von 0 °C durchführen läßt, ist dagegen erst jetzt gefunden worden. Die Tatsache, daß die mikrobizide Wirkung von alkoholisch wäßrigen Salzlösungen nicht mit fallender Temperatur abnimmt, sondern in manchen Fällen sogar mit fallender Temperatur ansteigt, ist im Vergleich zur Temperaturabhängigkeit bei anderen mikrobiziden Wirkstoffen höchst überraschend.

Die für das erfindungsgemäße Verfahren geeigneten Salze sollten eine gewisse Wasserlöslichkeit aufweisen, die vorzugsweise bei 20 °C mindest 0,1 g pro Liter und insbesondere mehr als 5 g pro Liter betragen sollte. Besonders geeignet sind sowohl Metallsalze von anorganischen als auch organischen Säuren, wobei als Salze anorganischer Säuren, insbesondere die Salze der Salzsäure, der Phosphorsäure und der Schwefelsäure geeignet sind. Einige dieser Salze werden in anderem Zusammenhang auch als Lewis-Säuren bezeichnet. Als hervorragende Vertreter dieser Salze seien NaCI, insbesondere aber K₃PO₄, Na₃PO₄ und ZnCl₂ genannt. Von den organischen Salzen eignen sich insbesondere die Metallsalze von Carbonsäuren mit 1 - 8 C-Atomen im Säuremolekül. Sowohl bei den anorganischen als auch bei den organischen Metallsalzen werden die Salze der Alkalimetalle, der Erdalkalimetalle und des Zinks besonders bevorzugt. Selbstverständlich können in den Desinfektionslösungen auch Gemische mehrerer Salze angewendet werden.

Die Konzentration an Salz beträgt in den Lösungen vorzugsweise zwischen 0,1 und 5 Gew.-%, gerechnet als wasserfreie Salze und bezogen auf die fertige Desinfektionslösung. In jedem Falle werden die Salze in den Desinfektionslösungen besonders bevorzugt in einer solchen Menge eingesetzt, daß bei Anwendungstemperatur die Sättigungskonzentration erreicht oder auch überschritten wird.

Bei den in den Desinfektionslösungen verwendeten Alkoholen handelt es sich in erster Linie um niedere wassermischbare Alkohole, insbesondere um aliphatische Monoalkohole, doch können auch Glykole und andere flüssige Polyole und deren Partialether Verwendung finden, beispielsweise Ethylenglykol, Propylenglykol, Glycerin, Butoxyethanol und Methoxybutanol. Besonders bevorzugt werden die leicht flüchtigen Alkohole, insbesondere die Alkohole mit 1 bis 4 C-Atomen im Molekül, von denen wiederum Ethanol und n-Propanol besonders bevorzugt werden. Selbstverständlich können anstelle einzelner Alkohole auch Mischungen von zwei oder mehr Alkoholen eingesetzt werden. Im Gemisch mit wassermischbaren Alkoholen können auch in geringerer Menge aliphatische Alkohole eingesetzt werden, die nur in begrenzter Menge in Wasser löslich sind. Die Konzentration an Alkoholen in der Desinfektionslösung soll vorzugsweise etwa 40 bis etwa 98 Gew.-%, bezogen auf die gesamte Desinfektionslösung, betragen. Besonders bevorzugt werden Alkoholkonzentrationen im Bereich von etwa 60 bis etwa 90 Gew.-% und insbesondere etwa 70 bis etwa 80 Gew.-% in der Desinfektionslösung.

Insbesondere dann, wenn die erfindungsgemäß verwendeten wäßrig-alkoholischen Salzlösungen auch bei Raumtemperatur und darüber zur Desinfektion eingesetzt werden sollen, können diese Lösung auch andere mikrobizid oder viruzid wirkende Subsanzen enthalten, wie sie für die Verwendung bei diesen Temperaturen bekannt sind. Zu erwähnen seien hier insbesondere quartäre Ammoniumverbindungen, Waserstoffperoxid und andere peroxidische Verbindungen, Aldehyde, Phenole, aromatische Alkohole wie Phenoxyethanol, anorganische Säuren und Aktivhalogenverbindungen genannt. Die Konzentration dieser Wirkstoffe wird in herkömmlicher Weise gewählt. Eine Störung der Wirkung des erfindungsgemäßen Verfahrens bei niedrigen Temperaturen ist im allgemeinen nicht zu befürchten.

Weiterhin können die erfindungsgemäß verwendeten Desinfektionslösungen Hilfs- und Zusatzstoffe, wie sie allgemein bei wäßrigen Desinfektionslösungen üblich sind, enthalten, sofern die Wirkung des Verfahrens dadurch nicht beeinträchtigt wird. Beispiele derartiger Hilfs- und Zusatzstoffe sind Netzmittel, Hydrotrope, Tenside, Korrosionsinhibitoren, Farbstoffe und Geruchsstoffe. Ihre Konzentration richtet sich nach dem gewünschten Effekt.

Die Herstellung der Desinfektionslösung bietet keine Probleme. In der Regel wird zunächst das Salz in der für die vorgesehene Konzentration nötigen Menge in Wasser gelöst und dann die notwendige Menge Alkohol eingemischt. Sofern dies für eine schnellere Auflösung zweckmäßig ist, kann die Herstellung der Desinfektionslösung auch bei erhöhten Temperaturen erfolgen. Weitere Zusatzstoffe werden den Lösungen im allgemeinen als letztes zugesetzt, können aber gegegebenenfalls auch in die zunächst rein wäßrige Lösung oder aber in den Alkohol vorgelöst werden.

Die Behandlung der Gegenstände im eigentlichen Desinfektionsverfahren erfolgt dann beispielsweise durch Eintauchen der Gegenstände für eine vorbestimmte Zeit in das gekühlte Desinfektionsbad oder durch Auftragen der Desinfektionslösung auf die kalten Gegenstände, beispielsweise durch Aufsprühen, Pinseln oder durch Abwischen der Gegenstände mit einem saugfähigen Material, das mit der Desinfektionslösung getränkt ist. Die Desinfektionslösung kann dabei sowohl in vorgekühlter Form oder aber, vorzugsweise, ungekühlt auf die Gegenstände aufgetragen werden. Denkbar ist auch, die ungekühlten Gegenstände mit der Desinfektionslösung bei etwa Raumtemperatur zu behandeln und sie dann mit der anhaftenden Lösung für die Einwirkzeit auf die Desinfektionstemperatur abzukühlen, wenn diese Verfahrensweise aus bestimmten Gründen, beispielsweise zur Materialschonung, zweckmäßig erscheint. Nach erfolgter Desinfektion kann das Desinfektionsmittel auf geeignete Weise wieder von den Gegenständen getrennt werden. Vielfach ist diese Maßnahme aber enbehrlich, wenn Reste des Desinfektionsmittels in oder auf den Gegenständen toleriert werden können.

### Beispiele

Die Prüfung der mikrobiziden Wirkung der verwendeten Zusammensetzungen erfolgte sowohl bei Raumtemperatur (Vergleich) als auch bei minus 20 °C und minus 70 °C. Zum Vergleich wurden weiterhin salzfreie alkoholische Zubereitungen untersucht.

Die Prüfung der viruziden Wirksamkeit erfolgte entsprechend der Richtlinie des Bundesgesundheitsamtes und der Deutschen Vereinigung zur Bekämpfung der Virukrankheiten (Zbl. Hyg. 1990: **189**, 554 - 562) im Virussuspensionstest. Zur Testdurchführung wurde das Desinfektionsmittel mit der jeweiligen Testvirussuspension im Verhältnis 9 : 1 gemischt und nach Ablauf der Versuchszeit diesem Ansatz eine Probe zur Virustitration entnommen. In den Fällen, in denen der Suspensionstest mit einer zusätzlichen Eiweißbelastung durchgeführt wurde, betrug das Mischungsverhältnis 8 : 1 : 1 (Desinfektionslösung zu Eiweißlösung zu Virussuspension).

Folgende Virussuspensionen wurden eingesetzt:
Poliovirus Typ 1, Stamm Mahoney (Anzucht und Titration auf Rhabdomyosarkomzellen)
Adenovirus Typ 2, Stamm Adenoid 6 (Anzucht und Titration auf Hela-Zellen)
Herpes simplex Virus, Typ 1 (Anzucht und Titration auf Verozellen)
Vakziniavirus (Anzucht auf Verozellen)
Simianvirus 40, Stamm 777 (Anzucht und Titration auf CV₁-Zellen)

Die Mischung der Desinfektionslösung und der Virussuspension erfolgte in allen Fällen bei Raumtemperatur (Gesamtvolumen jeweils 100 Mikroliter) in Eppendorf-Gefäßen. Unmittelbar danach wurden die dafür vorgesehenen Röhrchen durch Eintauchen in ein Kühlbad schockartig auf die Einwirkungstemperatur abgekühlt. Nach der vorgesehenen Einwirkungszeit bei dieser Temperatur wurden die Proben erneut auf Zimmertemperatur erwärmt und dann der Virusnachweis in Mikrotitrationsverfahren mit Hilfe der obengenannten Zellinien durchgeführt, nachdem eine Verdünnungsreihe entsprechende der Progression 1 : 10, 1 : 100. 1 : 1000 usw. hergestellt worden war.

Die mikrobizide Wirksamkeit der erfindungsgemäß verwendeten Zusammensetzungen wurde im Suspensionstest nach der Richtlinie für die Prüfung und Bewertung chemischer Desinfektionsverfahren, Stand 12.07.1991 durchgeführt, die von der Desinfektionsmittel-Kommission der Deutschen Gesellschaft für Hygiene und Mikrobiologie (DGHM) herausgegeben wird (mhp-Verlag, Ostring 13, 6200 Wiesbaden). Als Prüforganismen dienten

| | | |
|---|---|---|
| Staphylococcus aureus | ATCC | 6538 |
| Mycobacterium terrae | ATCC | 15755 |
| Candida albicans | ATCC | 10231 |

In der folgenden Tabelle sind für 12 unterschiedliche Rezepturen die Versuchsergebnisse bei verschiedenen Temperaturen und verschiedenen Einwirkungszeiten aufgeführt. Die Zahlenwerte geben in logarithmischen Einheiten (log₁₀) die Reduktionsfaktoren beim Gehalt an Mikroorganismen bzw. Viren nach der jeweiligen Einwirkungszeit an.

Die Versuchsergebnisse lassen erkennen, daß mit den erfindungsgemäß verwendeten wäßrig-alkoholischen Salzlösungen ein breites Wirksamkeitsprofil bis weiter unterhalb des Gefrierpunktes beibehalten wird.

**Tabelle**

| **Viruzide und mikrobizide Wirksamkeit** | | | | | | | |
|---|---|---|---|---|---|---|---|
| Abkürzungen: | | | | | | | |
| EWZ: Einwirkungszeit | | | | | | | |
| RF: Reduktionsfaktor | | | | | | | |
| RT: Raumtemperatur | | | | | | | |

| **Nr.** | **Rezeptur** | **Temp. in °C** | **Virus/Testkeim** | **RF/EWZ 1 Min.** | **RF/EWZ 5 Min.** | **RF/EWZ 15 Min.** | **RF/EWZ 60 Min.** |
|---|---|---|---|---|---|---|---|
| 1 | 5,0 g NaCI | -20 | Staph. aur. | | >5,95 | >6,02 | >5,95 |
| | 74,5 ml Ethanol (96 %) | | | | | | |
| | dest. Wasser ad 100 ml* | -20 | Cand. alb. | | >4,3 | >4,3 | >4,3 |
| | | -20 | Myc. ter. | | >5,3 | >5,3 | >5,3 |
| | | | | | | | |
| | | -20 | Polio | | 4,9 | 5,3 | ≥5,5 |
| | | -70 | | | | | ≥6,5 |
| | | RT | | | | | ≥6,5 |
| | | | | | | | |
| | | -20 | Adeno | | ≥4 | ≥4 | ≥4 |
| | | -20 | HSV | | ≥4,5 | ≥4,5 | ≥4,5 |
| | | | | | | | |
| | | RT | Vakzinia | ≥3 | | | ≥3 |
| | | -20 | | | | | ≥3 |
| | | -70 | | | | | ≥3 |
| | | | | | | | |
| | | RT | SV40 | ≥3,5 | | | ≥3,5 |
| | | -20 | | | | | ≥3,5 |
| | | -70 | | | | | ≥3,5 |
| | | | | | | | ≥3,5 |
| 2 | 5,0 g NaCI | -20 | Staph. aur. | | >5,95 | >6,02 | >5,95 |
| | 0,5 g Tween 80⁺ | | | | | | |
| | 1,43 g H₂O₂ (70 %) | -20 | Cand. | | >4,3 | >4,3 | >4,3 |
| | 74,5 ml Ethanol(96%) | | alb. | | | | |
| | dest.Wasser ad 100ml* | | | | | | |
| | | -20 | Myc. ter. | | >5,3 | >5,3 | >5,3 |
| | | | | | | | |
| | | -20 | Polio | | 4,5 | 4,5 | 5 |
| | | | | | | | |
| | | -20 | Adeno | | ≥4 | ≥4 | ≥2 |
| | | | | | | | |
| | | -20 | HSV | | ≥4,5 | ≥4,5 | ≥4,5 |
| 3 | 0,1 g NaCI | RT | Polio | | 4 | 4 | |
| | 0,5 g Tween 80⁺ | | | | | | |
| | 1,43 g H₂O₂ (70 %) | -20 | | | 3,6 | 4,4 | |
| | 74,5 ml Ethanol (96 %) | | | | | | |
| | dest. Wasser ad 100 ml* | | | | | | |
| 4 | 5,0 g Tri-Na-phosphat | -20 | Staph. aur. | | >5,95 | >6,02 | >5,95 |
| | 74,5 ml Ethanol (96 %) | | | | | | |
| | dest. Wasser ad 100 ml* | -20 | Cand. alb. | | >4,3 | >4,3 | >4,3 |
| | | | | | >5,3 | >5,3 | >5,3 |
| | | -20 | Myc.ter. | | | | |
| | | | | | | | |
| | | RT | Polio | 5,9 | | | >6,5 |
| | | -20 | | | 3,9 | 3,9 | >6,5 |
| | | -70 | | | | | >6,5 |
| | | | | | | | |
| | | RT | Adeno | >4 | | | >4 |
| | | -20 | | | ≥4 | ≥4 | >4 |
| | | -70 | | | | | ≥4 |
| | | | | | | | |
| | | -20 | HSV | | ≥4,5 | ≥4,5 | ≥4,5 |
| | | | | | | | |
| | | RT | Vakzinia | >3 | | | ≥3 |
| | | -20 | | | | | ≥3 |
| | | -70 | | | | | ≥3 |
| | | | | | | | |
| | | RT | SV40 | >3,5 | | | >3,5 |
| | | -20 | | | | | >3,5 |
| | | -70 | | | | | >3,5 |
| 5 | 5,0 g Tri-Na-Phosphat | RT | Polio | 3,7 | | | 7 |
| | 50 ml Ethanol (96 %) | -20 | | | | | 4,5 |
| | 30 ml n-Propanol | -70 | | | | | 4,1 |
| | dest. Wasser ad 100 ml* | | | | | | |
| | | RT | Adeno | >4 | | | >4 |
| | | -20 | | | | | >4 |
| | | -70 | | | | | >4 |
| 6 | 5,0 g Tri-Na-Phosphat | RT | Polio | 4,5 | | | 7 |
| | 60 ml Ethanol (96 %) | -20 | | | | | 4,9 |
| | 20 ml n-Propanol | -70 | | | | | 5 |
| | dest. Wasser ad 100 ml* | | | | | | |
| | | RT | Adeno | >4 | | | >4 |
| | | -20 | | | | | >4 |
| | | -70 | | | | | >4 |
| 7 | 5,0 g Tri-Na-phosphat | RT | Polio | >6,6 | | >6,6 | |
| | 0,5 g Tween 80⁺ | -20 | | 5,4 | | 5,3 | |
| | 74,5 ml Ethanol (96 %) | | | | | | |
| | dest. Wasser ad 100 ml* | RT | SV40 | ≥4,1 | | ≥4,1 | |
| | | -20 | | ≥3,5 | | >4,5 | |
| | | | | | | | |
| | | RT | Adeno | >5,5 | | >5,5 | |
| | | -20 | | >5,5 | | >5,5 | |
| 8 | 5,0 g Tri-Na-phosphat | -20 | Staph. aur. | | >5,95 | >6,02 | >5,95 |
| | 0,5 Tween 80⁺ | | | | | | |
| | 1,43 g H₂O₂ (70 %) | -20 | Cand. | | >4,3 | >4,3 | >4,3 |
| | 74,5 ml Ethanol (96 %) | | alb. | | | | |
| | dest. Wasser ad 100 ml* | | | | | | |
| | | -20 | Myc. ter. | | >5,3 | >5,3 | >5,3 |
| | | | | | | | |
| | | -20 | Polio | | 4 | 3,9 | 4,3 |
| | | | | | | | |
| | | -20 | Adeno | | ≥2 | n.a. | ≥2 |
| | | | | | | | |
| | | -20 | HSV | | ≥4,5 | ≥4,5 | ≥4,5 |
| 9 | 0,1 g Tri-Kaliumphosphat | RT | Polio | | 4,4 | 5 | |
| | 74,5 ml Ethanol (96 %) | -20 | | | 3,5 | 4,8 | |
| | dest. Wasser ad 100 ml | | | | | | |
| | | -20** | | | 4 | 3,9 | |
| | | -20*** | | | 4,5 | 4,5 | |
| 10 | 0,1 g Tri-Kaliumphosphat | RT | SV40 | | 2,6 | ≥3,6 | |
| | 0,5 g Tween 80⁺ | -20 | | | 2,5 | 3,3 | |
| | 74,5 ml Ethanol (96 %) | | | | | | |
| | dest. Wasser ad 100 ml | RT | Adeno | | >5,5 | >5,5 | |
| | | -20 | | | >5,5 | >5,5 | |
| 11 | 0,1 g Tri-Kaliumphosphat | RT | Polio | | 4,4 | 4,5 | |
| | 0,5 g Tween 80⁺ | -20 | | | 4,3 | 4,6 | |
| | 1,43 g H₂O₂ (70 %) | | | | | | |
| | 74,5 ml Ethanol (96 %) | | | | | | |
| | dest. Wasser ad 100 ml | | | | | | |
| 12 | 0,5 g ZnCl₂ | RT | Polio | | ≥5,1 | ≥5,1 | |
| | 0,5 g Tween 80⁺ | -20 | | | 3,9 | 4,4 | |
| | 74,5 ml Ethanol (96 %) | | | | | | |
| | dest. Wasser ad 100 ml* | RT | SV40 | | 1,6 | ≥3,6 | |
| | | -20 | | | 2,3 | ≥3,5 | |
| | | RT | Adeno | | ≥4,5 | ≥4,5 | |
| | | -20 | | | ≥4,5 | ≥4,5 | |
| A | 74,5 ml Ethanol (96 %) | RT | Polio | | 0,4 | 0,7 | |
| | dest. Wasser ad 100 ml | -20 | | | 0 | 0 | |
| | | RT | SV40 | | 1,2 | 2,1 | |
| | | -20 | | | 1,3 | 1,5 | |
| B | 0,5 g Tween 80⁺ | RT | Polio | | 0,5 | 1,1 | |
| | 74,5 ml Ethanol (96 %) | -20 | | | 0 | 0 | |
| | dest. Wasser ad 100 ml | | | | | | |
| | | RT | SV40 | | 1,2 | 1,9 | |
| | | -20 | | | 1 | 1,5 | |

| | | | | | | | |
|---|---|---|---|---|---|---|---|
| * mit Bodenkörper | | | | | | | |
| ** Belastung mit fötalem Kälberserum | | | | | | | |
| *** Belastung mit Rinderserumalbumin | | | | | | | |
| ⁺ Tween 80 = Ethoxiliertes Sorbitanoleat (ICI) | | | | | | | |

## Patentansprüche

1. Verfahren zur Desinfektion von Gegenständen, bei dem diese Gegenstände mit einer wäßrig-alkoholischen Salzlösung behandelt werden, **dadurch gekennzeichnet, daß** diese Behandlung bei Temperaturen unter 5 °C vorgenommen wird.

2. Verfahren nach Anspruch 1, bei dem Metallsalze anorganischer Säuren in der wäßrig-alkoholischen Lösung verwendet werden.

3. Verfahren nach Anspruch 1, bei dem Metallsalze organischer Säuren in der wäßrig-alkoholischen Lösung verwendet werden.

4. Verfahren nach Anspruch 3, bei dem Metallsalze von Carbonsäuren mit 1 bis 8 C-Atomen in der wäßrig-alkoholischen Lösung verwendet werden.

5. Verfahren nach Anspruch 1, bei dem das Salz ausgewählt ist aus der Gruppe der Salze der Alkalimetalle, der Erdalkalimetalle, des Zinks und Mischungen dieser Salze.

6. Verfahren nach einem der Ansprüche 2 oder 5, bei dem das Salz ausgewählt ist aus der Gruppe Metallsalze der Salzsäure, der Phosphorsäure, der Schwefelsäure und Gemische dieser Salze.

7. Verfahren nach Anspruch 6, bei dem das Salz ausgewählt ist aus der Gruppe K₃PO₄, Na₃PO₄ ZnCl₂ und Mischungen dieser Salze.

8. Verfahren nach einem der Ansprüche 1 bis 7, bei dem die Salzkonzentration in der wäßrig-alkoholischen Desinfektionslösung zwischen 0,1 und 5 Gew.-% beträgt und, vorzugsweise, bei Anwendungstemperatur mindestens der Sättigungskonzentration entspricht.

9. Verfahren nach einem der Ansprüche 1 bis 8, bei dem der in der Desinfektionslösung verwendete Alkohol aus der Gruppe der Alkohole mit 1 bis 4 C-Atomen und Gemischen solcher Alkohole ausgewählt ist, vorzugsweise, aus der Gruppe Ethanol, n-Propanol und Mischungen dieser beiden Alkohole ausgewählt ist.

10. Verfahren nach einem der Ansprüche 1 bis 9, bei dem die Alkoholkonzentration in der Desinfektionslösung 40 bis 98 Gew.-%, vorzugsweise 60 bis 90 Gew.-% und insbesondere 70 bis 80 Gew.-% beträgt.

11. Verfahren nach einem der Ansprüche 1 bis 10, bei dem die Desinfektionsbehandlung der Gegenstände bei Temperaturen unter 0 °C, vorzugsweise unter - 10 °C und insbesondere unter - 50 °C vorgenommen wird.

12. Verfahren nach einem der Ansprüche 1 bis 11 zur Zerstörung von Viren.

## Claims

1. A process for disinfecting articles in which the articles are treated with an aqueous alcoholic salt solution, **characterized in that** the treatment is carried out at temperatures below 5°C.

2. A process as claimed in claim 1, **characterized in that** metal salts of inorganic acids are used in the aqueous alcoholic solution.

3. A process as claimed in claim 1, **characterized in that** metal salts of organic acids are used in the aqueous alcoholic solution.

4. A process as claimed in claim 3, **characterized in that** metal salts of carboxylic acids containing 1 to 8 carbon atoms are used in the aqueous alcoholic solution.

5. A process as claimed in claim 1, **characterized in that** the salt is selected from the group consisting of the salts of alkali metals, alkaline earth metals, zinc and mixtures of these salts.

6. A process as claimed in claim 2 or 5, **characterized in that** the salt is selected from the group consisting of metal salts of hydrochloric acid, phosphoric acid, sulfuric acid and mixtures of these salts.

7. A process as claimed in claim 6, **characterized in that** the salt is selected from the group consisting of K₃PO₄, Na₃PO₄, ZnCl₂ and mixtures of these salts.

8. A process as claimed in any of claims 1 to 7, **characterized in that** the concentration of salt in the aqueous alcoholic disinfecting solution is between 0.1 and 5% by weight and preferably corresponds at least to the saturation concentration at the in-use temperature.

9. A process as claimed in any of claims 1 to 8, **characterized in that** the alcohol used in the disinfecting solution is selected from the group of alcohols containing 1 to 4 carbon atoms and mixtures thereof, preferably from the group consisting of ethanol, n-propanol and mixtures of these two alcohols.

10. A process as claimed in any of claims 1 to 9, **characterized in that** the concentration of alcohol in the disinfecting solution is from 40 to 98% by weight, preferably from 60 to 90% by weight and more preferably from 70 to 80% by weight.

11. A process as claimed in any of claims 1 to 10, **characterized in that** the disinfecting treatment of the articles is carried out at temperatures below 0°C, preferably at temperatures below -0°C and more preferably at temperatures below -50°C.

12. A process as claimed in any of claims 1 to 11 for destroying viruses.

## Revendications

1. Procédé de désinfection d'objets, dans lequel ces objets sont traités avec une solution hydroalcoolique de sel,
**caractérisé en ce que**
ce traitement est effectué à des températures en dessous de 5°C.

2. Procédé selon la revendication 1,
dans lequel
on utilise des sels métalliques d'acides minéraux dans la solution hydroalcoolique.

3. Procédé selon la revendication 1,
dans lequel
on utilise des sels métalliques d'acides organiques dans la solution hydroalcoolique.

4. Procédé selon la revendication 3,
dans lequel
on utilise des sels métalliques d'acides carboxyliques ayant de 1 à 8 atomes de carbone dans la solution hydroalcoolique.

5. Procédé selon la revendication 1,
dans lequel
le sel est choisi dans le groupe des sels de métal alcalin, de métal alcalinoterreux, de zinc et des mélanges de ces sels.

6. Procédé selon l'une des revendications 2 ou 5,
dans lequel
le sel est choisi dans le groupe des sels métalliques de l'acide chlorhydrique, de l'acide phosphorique, de l'acide sulfurique et des mélanges de ces sels.

7. Procédé selon la revendication 6,
dans lequel
le sel est choisi dans le groupe formé de PO₄K₃, PO₄Na₃, Cl₂Zn, et des mélanges de ces sels.

8. Procédé selon l'une des revendications 1 à 7,
dans lequel
la concentration en sel dans la solution hydroalcoolique de désinfection s'élève à entre 0,1 et 5% en poids, et de préférence correspond à la température d'utilisation, au moins à la concentration de saturation.

9. Procédé selon l'une des revendications 1 à 8,
dans lequel
l'alcool utilisé dans la solution désinfectante est choisi dans le groupe des alcools ayant de 1 à 4 atomes de carbone et des mélanges de ces alcools, de préférence dans le groupe de l'éthanol, du n-propanol et des mélanges de ces deux alcools.

10. Procédé selon l'une des revendications 1 à 9,
dans lequel
la concentration en alcool dans la solution désinfectante s'élève de 40% à 98% en poids, de préférence de 60 à 90% en poids et en particulier de 70 à 80% en poids.

11. Procédé selon l'une des revendications 1 à 10,
dans lequel
on effectue le traitement de désinfection des objets, à des températures en dessous de 0°C de préférence en dessous de -10°C et en particulier en dessous de -50°C.

12. Procédé selon l'une des revendications 1 à 11,
pour la destruction des virus.
